# FASCICULE DE BREVET EUROPEEN

(11) **EP 4 162 152 B1**
(45) Date de publication et mention de la délivrance du brevet: **09.04.2025**
(21) Numéro de dépôt: 21732492.0
(22) Date de dépôt: 26.05.2021
(51) Int. Cl.: F01D 9/04, F01D 5/28

(54) **DISTRIBUTEUR DE TURBINE POUR UNE TURBOMACHINE**
TURBINENDÜSE FÜR EINEN TURBINENMOTOR
TURBINE NOZZLE FOR A TURBINE ENGINE

(30) Priorité: 04.06.2020 FR 2005835
(43) Date de publication de la demande: 12.04.2023
(73) Titulaire: SAFRAN AIRCRAFT ENGINES, 75015 Paris (FR)
(72) Inventeur: CAHEN, Jean, 77550 MOISSY-CRAMAYEL (FR); BENOIT, Cyril Léo, 77550 MOISSY-CRAMAYEL (FR); MALLAT-DESMORTIERS, Jean-Philippe, 77550 MOISSY-CRAMAYEL (FR); NOSELLI, Romain, 77550 MOISSY-CRAMAYEL (FR); SANCHEZ GOMEZ, Mireya, 77550 MOISSY-CRAMAYEL (FR)
(74) Mandataire: Gevers & Orès
(86) Numéro de dépôt international: PCT/FR2021/050957
(87) Numéro de publication internationale: WO 2021/245339

(56) Documents cités:
- EP-A1- 3 091 187
- EP-A2- 1 227 218
- EP-A2- 2 213 840
- EP-A2- 2 365 198
- US-B2- 8 950 069

## Description

### Domaine technique de l'invention

La présente invention concerne un distributeur de turbine pour une turbomachine d'aéronef.

### Arrière-plan technique

L'état de la technique comporte notamment le document EP 1 227 218 A2.

Une turbomachine et en particulier une turbomachine d'aéronef comprend au moins une veine annulaire suivant un axe longitudinal et dans laquelle circule un flux d'air aérodynamique. Ce flux d'air traverse d'amont en aval et successivement un ensemble de compresseur, une chambre de combustion et un ensemble turbine de la turbomachine. Les termes « amont » et « aval » sont définis par rapport au sens de circulation des gaz dans la turbomachine. L'ensemble de compresseur comprend un ou plusieurs étages de compresseur et l'ensemble de turbine comprend un ou plusieurs étages de turbine. Les étages de compresseur et de turbine comprennent chacun plusieurs rangées annulaires de pales fixes et des rangées d'aubes rotatives. Les pales fixes connues sous le terme de distributeurs dans une turbine ou redresseurs dans un compresseur dirigent le flux vers les aubes rotatives. Ces dernières échangent l'énergie du flux avec un arbre rotatif coaxial à l'axe longitudinal. Chaque pale et chaque aube s'étend radialement entre une extrémité de tête et une extrémité de pied et comprend en amont un bord d'attaque et en aval un bord de fuite. Entre les bords d'attaque et de fuite s'étendent des surfaces intrados et extrados opposées. Les pales fixes s'étendent entre deux parois annulaires du distributeur, respectivement interne et externe.

Un tel distributeur de turbine est sectorisé et comporte plusieurs secteurs de distributeur disposés circonférentiellement bout à bout autour de l'axe longitudinal. Un secteur comporte plusieurs des pales fixes.

Les distributeurs de chaque étage sont constitués de pales ayant un profil identique et constituées d'un unique alliage métallique. On comprend ici que toutes les pales fixes d'un même étage présentent un profil identique et sont constituées d'un unique alliage métallique. Le profil et l'alliage de toutes les pales d'un même étage ont pour objectif d'assurer un niveau de rendement de performance suffisant et une résistance mécanique permettant de se prémunir de toute défaillance. Ainsi, le choix du profil et de l'alliage métallique des pales est un compromis notamment entre tenue mécanique, tenue à la température, masse volumique, rugosité, fabricabilité et coûts.

Or, l'étude des cartographies de contraintes montre que, bien qu'identiques les unes aux autres, les pales d'un même distributeur, c'est-à-dire les pales d'un même étage, ne sont pas soumises aux mêmes contraintes mécaniques, notamment du fait de la sectorisation du distributeur. Le choix d'un matériau unique n'est donc pas optimisé pour au moins une partie des pales.

L'invention vise à améliorer au moins un des problèmes précités.

### Résumé de l'invention

L'invention propose à cet effet un distributeur de turbine pour une turbomachine, comprenant deux parois annulaires s'étendant autour d'un même axe, les parois étant reliées entre elles par des pales à profil aérodynamique, le distributeur étant sectorisé et comportant plusieurs secteurs de distributeur disposés circonférentiellement bout à bout autour dudit axe.

Selon l'invention les pales comprennent des premières pales réalisées dans un premier alliage métallique, et des secondes pales réalisées dans un second alliage métallique diffèrent du premier alliage, chaque secteur de distributeur comprend des premières pales et des secondes pales.

L'invention propose ainsi de différencier les matériaux des premières pales par rapport à celui des secondes pales de manière à pouvoir prendre en considération les différentes contraintes mécaniques exercées respectivement sur les première et les secondes pales.

On pourra alors choisir par exemple pour les pales subissant un effort mécanique moins important, un matériau :
- de densité plus faible afin de réduire le poids de la turbine, et/ou
- avec une meilleure rugosité afin de réduire les pertes aérodynamiques, et/ou
- avec un coût de revient plus faible.

On pourra également choisir un matériau plus performant pour les pales subissant le plus d'effort mécanique et réduire le profil de toute les pales de manière à réduire le poids du distributeur et améliorer la performance aérodynamique globale du distributeur.

Le distributeur selon l'invention peut comprendre une ou plusieurs des caractéristiques ci-dessous, prises isolément les unes avec les autres ou en combinaison les unes avec les autres :
- chaque secteur de distributeur comprend des premières pales aux extrémités circonférentielles de ce secteur, et des secondes pales entre ces premières pales.
- chaque secteur de distributeur comprend entre trois et six pales, dont seulement deux premières pales qui sont situées respectivement aux extrémités circonférentielles de ce secteur.
- le premier alliage a :
   a) une Re0,2 supérieure à celle du second alliage, et/ou
   b) un module de Young inférieur à celui du second alliage, et/ou
   c) un coefficient de dilatation supérieur à celui du second alliage, et/ou
   d) un allongement à la rupture supérieure à celui du second alliage.
- les premier et second alliages sont du type équiaxe.
- les premières pales sont en René125 et les secondes pales sont en René77.
- les pales ont chacune un bord d'attaque et un bord de fuite, le bord de fuite de chacune des pales ayant une épaisseur inférieure à 0,5mm, et de préférence inférieure ou égale à 0,3mm, et chacune des pales ayant une épaisseur maximale inférieure à 3mm, et de préférence inférieure ou égale à 2mm.

La présente invention concerne également une turbomachine, en particulier d'aéronef, comportant au moins un distributeur tel que décrit précédemment. La présente invention concerne également un procédé de fabrication d'un distributeur tel que décrit précédemment. Selon l'invention, chacun des secteurs est réalisé par fabrication additive.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une vue schématique en perspective d'une turbomachine d'aéronef, vue de l'aval et de côté ;
- la figure 2 est une vue schématique en perspective d'un distributeur selon l'invention; et
- les figures 3a et 3b sont des vues schématiques de profil classique (figure 3a) et optimisé (figure 3b) de pales.

### Description détaillée de l'invention

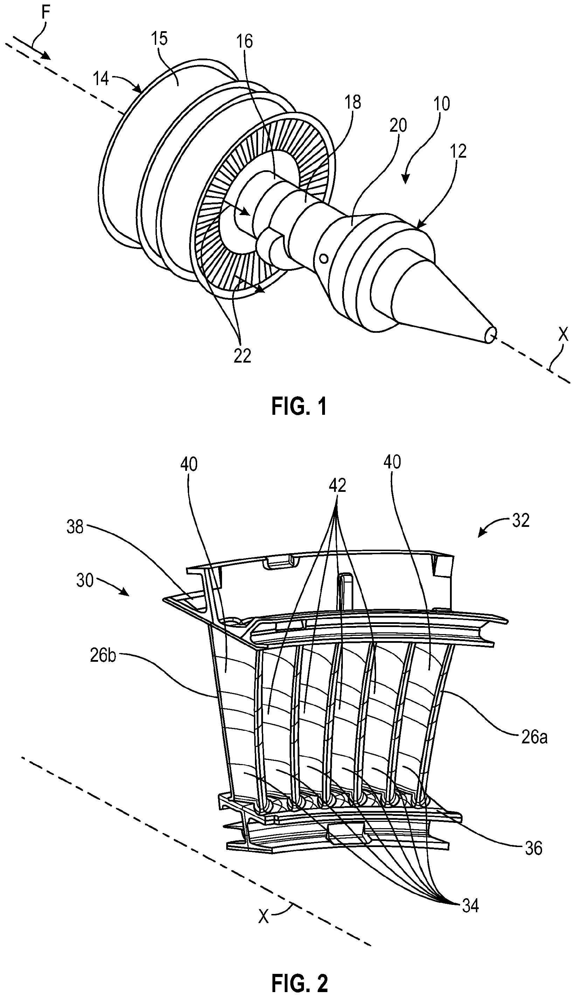

La figure 1 montre de manière schématique une turbomachine 10 d'aéronef qui comprend de manière classique un générateur de gaz 12 dont un arbre entraîne une soufflante 14 qui est ici entourée par un carter 15. Le générateur de gaz 12 comprend au moins un compresseur 16, une chambre de combustion 18 et au moins une turbine 20.

Dans le cas d'une turbomachine à double flux, un flux F pénètre dans la soufflante 14 et se divise ensuite en un flux primaire (non visible sur la figure), qui pénètre dans le générateur de gaz 12 et un flux secondaire 22 qui s'écoule autour du générateur de gaz. Le flux primaire traverse notamment le compresseur 16 et la turbine 18.

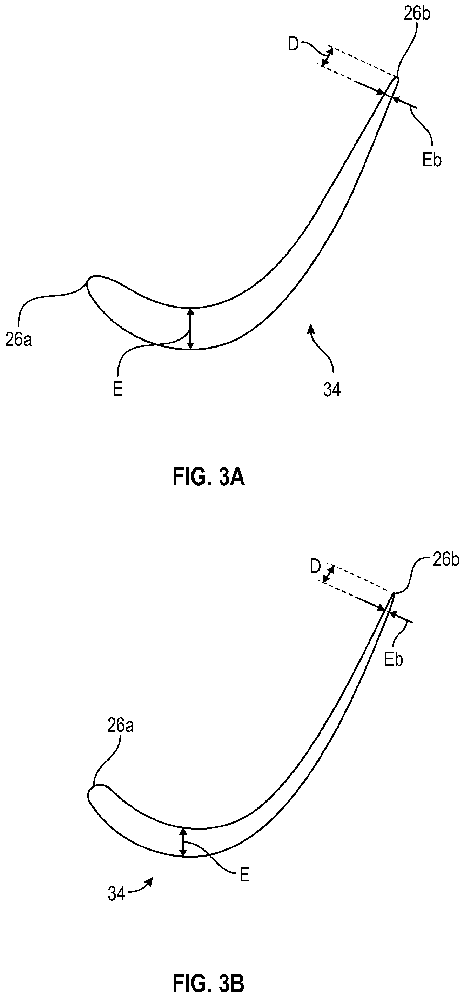

La turbine 20, par exemple turbine 20 basse pression, comprend un ou plusieurs étages de turbine. Les étages de turbine comprennent chacun plusieurs rangées annulaires de pales fixes à profil aérodynamique (référencée 34 sur les figures 2 et 3) et des rangées de pales rotatives (non représentées). Les pales s'étendent radialement à travers la turbine 20 où circule le flux primaire. Les pales fixes sont configurées pour diriger le flux primaire vers les pales rotatives. Le terme « radial » est défini par rapport à un axe sensiblement perpendiculaire à un axe longitudinal X de la turbomachine.

Comme visible à la figure 2, chaque étage de la turbine comprend un distributeur 30 sectorisé, c'est-à-dire un distributeur 30 comportant plusieurs secteurs 32 de distributeur disposés circonférentiellement bout à bout autour de l'axe longitudinal X. Chaque secteur 32 comporte une pluralité desdites pales 34 fixes.

Le distributeur 30 comprend en outre deux parois annulaires 36, 38 en forme de plates-formes, respectivement radialement interne 36 et radialement externe 38. Les parois 36, 38 sont notamment reliées entre-elles par les pales fixes 34.

Chaque pale 34 comprend notamment une paroi extrados et une paroi intrados s'étendant axialement, c'est-à-dire selon l'axe longitudinal X. Les parois extrados et intrados sont reliées entre elles en amont par un bord d'attaque 26a et en aval par un bord de fuite 26b. De manière générale, les termes « amont » et « aval » sont définis par rapport à la circulation du flux F, parallèle à l'axe longitudinal X, dans la turbomachine 10, comme représenté dans la figure 1.

Dans l'art antérieur, toutes les pales 34 d'un même distributeur sont identiques, c'est à dire que les profils et alliages métallique sont les mêmes pour toutes les pales 34 d'un même étage de la turbine. Néanmoins, l'étude des cartographies de contraintes sur les pales 34 montre que toutes les pales 34 ne sont pas soumises aux mêmes contraintes mécaniques lors du fonctionnement de la turbomachine bien qu'elles soient identiques les unes aux autres.

Cette étude des contraintes permet de différencier notamment deux catégories de pales 34 dans chaque secteur de distributeur 32 en fonction des contraintes mécaniques qu'elles subissent lors du fonctionnement de la turbomachine. Plus précisément chaque secteur comprend des premières pales 40 et des secondes pales 42 subissant des contraintes mécaniques différentes. Les premières pales 40 sont positionnées par exemple aux extrémités circonférentielles du secteur 32, et les secondes pales 42 se situent notamment entre ces premières pales 40. Chaque secteur de distributeur 32 comprend par exemple deux premières pales 40 et entre une et six secondes pales 42 et ici quatre secondes pales 42. Les secondes pales 42 sont soumises ici à un niveau de contrainte plus faible que les premières pales 40. Les premières pales 40, travaillent par exemple en traction alors que les secondes pales 42 travaillent en particulier en compression.

L'invention propose de réaliser les premières pales 40 et les secondes pales 42 dans un alliage métallique différent, respectivement un premier et un second alliage, de manière à optimiser les matériaux des différentes pales 34. Le secteur 32 de distributeur de l'invention est donc un secteur multi-matériau. Les premier et second alliages sont par exemple du type équiaxe. Grâce à l'invention, il est ainsi possible de choisir des premier et second alliages métalliques différents pour les premières et secondes pales 40, 42 en fonction de leur besoin respectif en résistance mécanique de manière à optimiser la masse et les performances aérodynamiques du distributeur ainsi qu'à améliorer le statut mécanique général et local du distributeur.

Le fait que les secondes pales 42 soient soumises à un niveau de contrainte plus faible permet d'avoir de la marge quant à la résistance mécanique du matériau à choisir. Cette marge mécanique peut être utilisée pour différents types d'optimisations permettant d'améliorer la performance du moteur.

En particulier, selon un premier mode de réalisation de l'invention, le second alliage utilisé pour les secondes pales 42 subissant moins de contraintes mécaniques est optimisé et le profil des pales 34 n'est pas nécessairement modifié.

Ainsi, on choisit par exemple pour les secondes pales 42, un second alliage métallique :
- de densité plus faible afin de réduire le poids du distributeur et donc de la turbine,
- avec une meilleure rugosité afin de réduire les pertes aérodynamiques, et/ou,
- avec un coût de revient plus faible.

Le premier alliage des premières pales 40 présente alors notamment les caractéristiques suivantes :
- une limite d'élasticité à 0,2%, Re0,2, supérieure à celle du second alliage, et/ou
- un module de Young inferieur à celui du second alliage, et/ou
- un coefficient de dilatation supérieur à celui du second alliage, et/ou
- un allongement à la rupture supérieur à celui du second alliage.

Dans cet exemple de réalisation, les premières pales 40 sont par exemple en matériau René125, un matériau qui assure notamment une meilleure tenue en fatigue oligocyclique et en fluage. Les secondes pales 42 sont par exemple en un matériau René77, un matériau moins cher et moins dense, permettant un gain économique et un gain de masse.

L'optimisation est principalement pilotée par la limite d'élasticité à 0,2%, Re0,2. Par exemple, entre 600°C et 1000°C, le delta entre le matériau René125 et le matériau René77 entraîne un delta de résistance supérieur à 150MPa, ce qui peut représenter une augmentation d'environ 30% de la résistance suivant la température.

L'optimisation est également pilotée par la densité, car la différence de densité entre le René125 et le René77 est d'environ +7,5%.

Un deuxième mode de réalisation de l'invention, pouvant se combiner au premier mode de réalisation ou s'effectuer indépendamment du premier mode de réalisation, consiste en une optimisation du premier alliage des premières pales 40 permettant d'obtenir une marge mécanique sur l'ensemble des pales 34 et ainsi d'optimiser leur profil. De ce fait, les pales 34 seront moins massiques et plus performantes d'un point de vue aérodynamique.

Pour résister aux contraintes mécaniques, malgré la réduction du profil des pales 34, les premières pales 40, identifiées comme fortement chargées, sont ainsi optimisées par un premier alliage plus performant. Les secondes pales 42, identifiées comme faiblement contraintes, conservent leur matériau initial ou un matériau présentant des caractéristiques de résistance mécanique intermédiaire.

Les profils des pales 34, comme représenté sur les figures 3a et 3b, permettent de considérer les différentes épaisseurs d'une pale 34 de profil classique (figure 3a) et d'une pale 34 de profil optimisé (figure 3b) c'est-à-dire plus fine. Les pales 34 de profil optimisé ont le même double objectif que les pales 34 de profil classique, à savoir d'assurer un niveau de rendement des performances aérodynamiques suffisant et d'avoir une résistance mécanique permettant de se prémunir de toute défaillance.

Une pale 34 a une épaisseur E maximale. Chacune des pales 34 de profil classique a par exemple une épaisseur E maximale inférieure à 3mm. Cette épaisseur maximale E peut être réduite notamment à 2mm sur une pale 34 de profil optimisé grâce à l'invention et en particulier au choix d'un matériau plus performant pour les premières pales 40.

En outre, à une distance D prédéterminée, par exemple 1 mm, du bord de fuite 26b de la pale 34, on peut mesurer l'épaisseur Eb d'une pale 34, au niveau de son bord de fuite 26b. Le bord de fuite 26b de chacune des pales 34 de profil classique a par exemple une épaisseur Eb inférieure à 0,5mm. Cette épaisseur de bord de fuite Eb peut être réduite notamment à 0,3mm sur une pale 34 de profil optimisé grâce à l'invention et en particulier au choix d'un matériau plus performant pour les premières pales 40.

L'optimisation du profil d'une pale 34 de distributeur 30 d'une turbine basse pression permet par exemple un gain de masse non négligeable de l'ordre de 30% par pale 34.

En outre, l'optimisation des profils des pales 34 de distributeur 30 d'une turbine basse pression, notamment en réduisant la finesse du bord de fuite 26b, permet un gain de performance moteur, notamment de l'ordre de 0,01 point de rendement par distributeur.

Chaque secteur de distributeur 32 est par exemple fabriqué selon l'invention par fabrication additive. Ce type de fabrication permet la liberté de choix de matériau par zones du secteur à condition que les matériaux soient compatibles entre eux.

Alternativement, chaque secteur pourrait être fabriqué par d'autres procédés de fabrication et notamment par un procédé de fonderie.

La présente invention peut être appliquée à une turbomachine 10, en particulier d'aéronef, comportant au moins un distributeur 30.

## Revendications

1. Distributeur de turbine (30) pour une turbomachine (10), comprenant deux parois annulaires (36,38) s'étendant autour d'un même axe (X), les parois (36,38) étant reliées entre elles par des pales (34) à profil aérodynamique, le distributeur (30) étant sectorisé et comportant plusieurs secteurs (32) de distributeur disposés circonférentiellement bout à bout autour dudit axe (X), **caractérisé en ce que** les pales (34) comprennent des premières pales (40) réalisées dans un premier alliage métallique, et des secondes pales (42) réalisées dans un second alliage métallique différent du premier alliage, chaque secteur (32) de distributeur comprenant des premières pales (40) et des secondes pales (42).

2. Distributeur (30) selon la revendication précédente, dans lequel chaque secteur (32) de distributeur comprend des premières pales (40) aux extrémités circonférentielles de ce secteur (32), et des secondes pales (42) entre ces premières pales (40).

3. Distributeur (30) selon la revendication 2, dans lequel chaque secteur (32) comprend entre trois et six pales (40, 42), dont seulement deux premières pales (40) qui sont situées respectivement aux extrémités circonférentielles de ce secteur.

4. Distributeur (30) selon l'une des revendications précédentes, dans lequel le premier alliage a :
- une Re0,2 supérieure à celle du second alliage, et/ou
- un module de Young inférieur à celui du second alliage, et/ou
- un coefficient de dilatation supérieur à celui du second alliage, et/ou
- un allongement à la rupture supérieure à celui du second alliage.

5. Distributeur (30) selon l'une des revendications précédentes, dans lequel les premier et second alliages sont du type équiaxe.

6. Distributeur (30) selon l'une des revendications précédentes, dans lequel les premières pales (40) sont en René125 et les secondes pales (42) sont en René77.

7. Distributeur (30) selon l'une des revendications précédentes, dans lequel les pales (34) ont chacune un bord d'attaque (26a) et un bord de fuite (26b), le bord de fuite (26b) de chacune des pales (34) ayant, à une distance (D) prédéterminée du bord de fuite, par exemple 1mm, une épaisseur (Eb) inférieure à 0,5mm, et de préférence inférieure ou égale à 0,3mm, et chacune des pales (34) ayant une épaisseur (E) maximale inférieure à 3mm, et de préférence inférieure ou égale à 2mm.

8. Turbomachine (10), en particulier d'aéronef, comportant au moins un distributeur (30) selon l'une des revendications précédentes.

9. Procédé de fabrication d'un distributeur (30) selon l'une des revendications 1 à 7, **caractérisé en ce que** chacun des secteurs (32) est réalisé par fabrication additive.

## Patentansprüche

1. Turbinendüse (30) für ein Turbotriebwerk (10), zwei ringförmige Wände (36,38) umfassend, die sich um eine gleiche Achse (X) herum erstrecken, wobei die Wände (36,38) durch Schaufeln (34) mit aerodynamischem Profil miteinander verbunden sind, wobei die Düse (30) in Sektoren aufgeteilt ist und mehrere Düsensektoren (32) beinhaltet, die umfänglich von einem Ende zum anderen um die Achse (X) herum angeordnet sind, **dadurch gekennzeichnet, dass** die Schaufeln (34) erste Schaufeln (40) umfassen, die aus einer ersten Metalllegierung hergestellt sind, und zweite Schaufeln (42), die aus einer zweiten Metalllegierung, die sich von der ersten Legierung unterscheidet, hergestellt sind,, wobei jeder Düsensektor (32) erste Schaufeln (40) und zweite Schaufeln (42) umfasst.

2. Düse (30) nach dem vorstehenden Anspruch, wobei jeder Düsensektor (32) erste Schaufeln (40) an den Umfangsenden dieses Sektors (32), und zweite Schaufeln (42) zischen diesen ersten Schaufeln (40) umfasst.

3. Düse (30) nach Anspruch 2, wobei jeder Sektor (32) zwischen drei und sechs Schaufeln (40, 42) umfasst, darunter nur erste zwei Schaufeln (40), die sich jeweils an den Umfangsenden dieses Sektors befinden.

4. Düse (30) nach einem der vorstehenden Ansprüche, wobei die erste Legierung aufweist:
- eine Re0,2 größer als jene der zweiten Legierung, und/oder
- ein Young-Modul kleiner als jenes der zweiten Legierung, und/oder
- einen Dehnungskoeffizienten größer als jenen der zweiten Legierung, und/oder
- eine Bruchdehnung größer als jene der zweiten Legierung.

5. Düse (30) nach einem der vorstehenden Ansprüche, wobei die erste und zweite Legierung vom gleichachsigen Typ sind.

6. Düse (30) nach einem der vorstehenden Ansprüche, wobei die ersten Schaufeln (40) aus René125 sind und die zweiten Schaufeln (42) aus René77 sind.

7. Düse (30) nach einem der vorstehenden Ansprüche, wobei die Schaufeln (34) jeweils eine Vorderkante (26a) und eine Hinterkante (26b) aufweisen, wobei die Hinterkante (26b) einer jeden der Schaufeln (34) in einem vorbestimmten Abstand (D) zur Hinterkante, von beispielsweise 1mm, eine Dicke (Eb) kleiner als 0,5mm, und vorzugsweise kleiner oder gleich 0,3mm aufweist, und jede der Schaufeln (34) eine maximale Dicke (E) kleiner als 3mm, und vorzugsweise kleiner oder gleich 2mm aufweist.

8. Turbotriebwerk (10), insbesondere eines Luftfahrzeugs, das mindestens eine Düse (30) nach einem der vorstehenden Ansprüche beinhaltet.

9. Verfahren zum Herstellen einer Düse (30) nach einem der Ansprüche 1 bis 7, **dadurch gekennzeichnet, dass** jeder der Sektoren (32) durch additive Fertigung hergestellt wird.

## Claims

1. A bladed turbine stator (30) for a turbine engine (10), comprising two annular walls (36, 38) extending about the same axis (X), the walls (36, 38) being connected to each other by blades (34) having an aerodynamic profile, the bladed stator (30) being divided into sectors and comprising several bladed stator sectors (32) arranged circumferentially end to end about said axis (X), **characterised in that** the blades (34) comprise first blades (40) made of a first metal alloy, and second blades (42) made of a second metal alloy different from the first alloy, each bladed stator sector (32) comprising first blades (40) and second blades (42).

2. The bladed stator (30) according to the preceding claim, wherein each bladed stator sector (32) comprises first blades (40) at the circumferential ends of that sector (32), and second blades (42) between those first blades (40).

3. The bladed stator (30) according claim 2, wherein each sector (32) comprises between three and six blades (40, 42), of which only two first blades (40) are located at the circumferential ends of that sector respectively.

4. The bladed stator (30) according to any one of the preceding claims, wherein the first alloy has:
- a higher Re0.2 than the second alloy, and/or
- a lower Young's modulus than the second alloy, and/or
- a higher coefficient of expansion than the second alloy, and/or
- a higher elongation at break than the second alloy.

5. The bladed stator (30) according to any one of the preceding claims, wherein the first and second alloys are of the equiaxed type.

6. The bladed stator (30) according to any of the preceding claims, wherein the first blades (40) are made of René125 and the second blades (42) are made of René77.

7. The bladed stator (30) according to any one of the preceding claims, wherein the blades (34) each have a leading edge (26a) and a trailing edge (26b), the trailing edge (26b) of each of the blades (34) having, at a predetermined distance (D) from the trailing edge for example 1mm, a thickness (Eb) of less than 0.5mm, and preferably less than or equal to 0.3mm, and each of the blades (34) having a maximum thickness (E) of less than 3mm, and preferably less than or equal to 2mm.

8. A turbine engine (10), in particular aircraft, comprising at least one bladed stator (30) according to one of the preceding claims.

9. A method of manufacturing a bladed stator (30) according to one of claims 1 to 7, **characterised in that** each of the sectors (32) is produced by additive manufacturing.
